Europäisches Patentamt

European Patent Office

Office européen des brevets

(11) Veröffentlichungsnummer: **0 456 228 A2**

## (12) EUROPÄISCHE PATENTANMELDUNG

(21) Anmeldenummer: **91107520.8**

(22) Anmeldetag: **08.05.91**

(51) Int. Cl.⁵: **G01B 5/25**

(30) Priorität: **11.05.90 DE 9005381 U**

(43) Veröffentlichungstag der Anmeldung:
**13.11.91 Patentblatt 91/46**

(84) Benannte Vertragsstaaten:
**AT BE CH DE FR GB IT LI NL**

(71) Anmelder: **Giggenbach, Martin**
**Diessener Strasse 20**
**W-8919 Utting(DE)**

(72) Erfinder: **Giggenbach, Martin**
**Diessener Strasse 20**
**W-8919 Utting(DE)**

(74) Vertreter: **Michelis, Theodor, Dipl.-Ing. et al**
**Tattenbachstrasse 9**
**W-8000 München 22(DE)**

(54) Standrohrvermessung.

(57) Zum exakten Überprüfen der Achslinearität von langgestreckten Rundkörpern (Stangen oder Rohren), insbesondere zum Überprüfen der Ausgerichtetheit von Radgabeln an Krafträdern ist erfindungsgemäß eine Vorrichtung vorgesehen mit einem verschwenkbar auf einem Abschnitt des Rundkörpers (1), z.B. einem oberen Gabelrohr befestigbaren Haltekörper (4) mit einem sich in Richtung des zu überprüfenden Rundkörpers erstreckenden, in sich starren Auslegers (2), an dessem freien Ende ein den Abstand zwischen Auslegerende (5) und Rundkörperoberfläche erfassenden Meßfühler (3).

EP 0 456 228 A2

Die Erfindung bezieht sich auf eine Vorrichtung zum Überprüfen der Achslinearität von langgestreckten Rundkörpern, wie Stangen oder Rohre. Sie ist insbesondere zum Überprüfen der Ausgerichtetheit der Holme von Radgabeln an Krafträdern bestimmt.

Insbesondere die Holme einer Vorderradgabel an einem Motorrad müssen relativ häufig auf ihre Achslinearität, also auf mögliche beispielsweise auch durch Verdrehungen hervorgerufene Biegungen überprüft werden. Dies deshalb, da die Vorderradgabel, insbesondere bei schweren Motorrädern schon bei einem einfachen Umfallen des Motorrades oder gar bei einem Unfall oder Sturz leicht in ihrer Ausgerichtetheit verbogen werden können, und zwar in praktisch alle Richtungen. Durch eine einfache Sichtprüfung sind dabei relativ kleine Biegungen oder auch Verdrehungen der ganzen Gabel, die trotz ihrer Geringfügigkeit das Fahrverhalten sehr nachteilig beeinflussen, nicht sichtbar.

Um auch kleine Biegungen der einzelnen Standrohre der Gabel, müssen bislang die kompletten Gabelholme ausgebaut und zerlegt werden. Nach dem Zerlegen wird jedes Standrohr nach Zentrieren mit einer Meßuhr oder dergleichen vermessen.

Ein derartiges Vorgehen ist äußerst zeitaufwendig. Darüberhinaus führt ein häufiges Ein- und Ausbauen zur Lockerung von Halteschrauben usw., was die Sicherheit des Motorrades selbst in Frage stellen kann.

Aufgabe der Erfindung ist es, eine Vorrichtung anzugeben, die das Überprüfen der Achslinearität allgemein von langgestreckten Rundkörpern wie Stangen oder Rohren und insbesondere der Holme (Standrohre) von Radgabeln an Krafträdern vor Ort ermöglicht, d.h. mit der die zu vermessenden Rundkörper, also die Holme auch im eingebauten Zustand vermessen werden können, so daß ein Ausbau der Holme dann und nur dann notwendig ist, wenn die Messung eine Verbiegung im Rundkörper selbst anzeigt.

Diese Aufgabe wird mit einer Vorrichtung mit den Merkmalen des Anspruches 1 gelöst.

Bei der Vorrichtung nach der Erfindung wird also ein auf einen Abschnitt des Rundkörpers, beispielsweise auf dem oberen Gabelrohr einer Radgabel befestigbarer Haltekörper vorgesehen, von dem sich in Richtung des zu überprüfenden Rundkörpers, also beispielsweise dem Holm der Radgabel, erstreckender, in sich absolut formsteifer Ausleger vorgesehen ist, an dessen freien Ende ein den Abstand zwischen Auslegerende und Rundkörperoberfläche erfassender Meßfühler vorgesehen ist. Dabei zeigt dann der Meßfühler beim Verdrehen des Haltekörpers zusammen mit dem Ausleger um den Rundkörper, also beispielsweise dem oberen Gabelrohr, Abweichungen des Abstandes des Auslegerendes zur Oberfläche des Rundkörpers an, was unmittelbar zeigt, daß der Rundkörper nicht mehr linear ausgerichtet, also verbogen ist.

Einzelheiten der Vorrichtung nach der Erfindung und vorteilhafte Ausgestaltungen werden im folgenden in Verbindung mit der anliegenden Zeichnung erläutert. In der Zeichnung zeigen:

Fig. 1    die Vorrichtung im Prizip in einer Seitenansicht,

Fig. 2    einen Schnitt durch den Haltekörper der Vorrichtung längs der Linie II - II und

Fig. 3    schematisch den Einsatz der Vorrichtung nach der Erfindung an einer Motorradgabel.

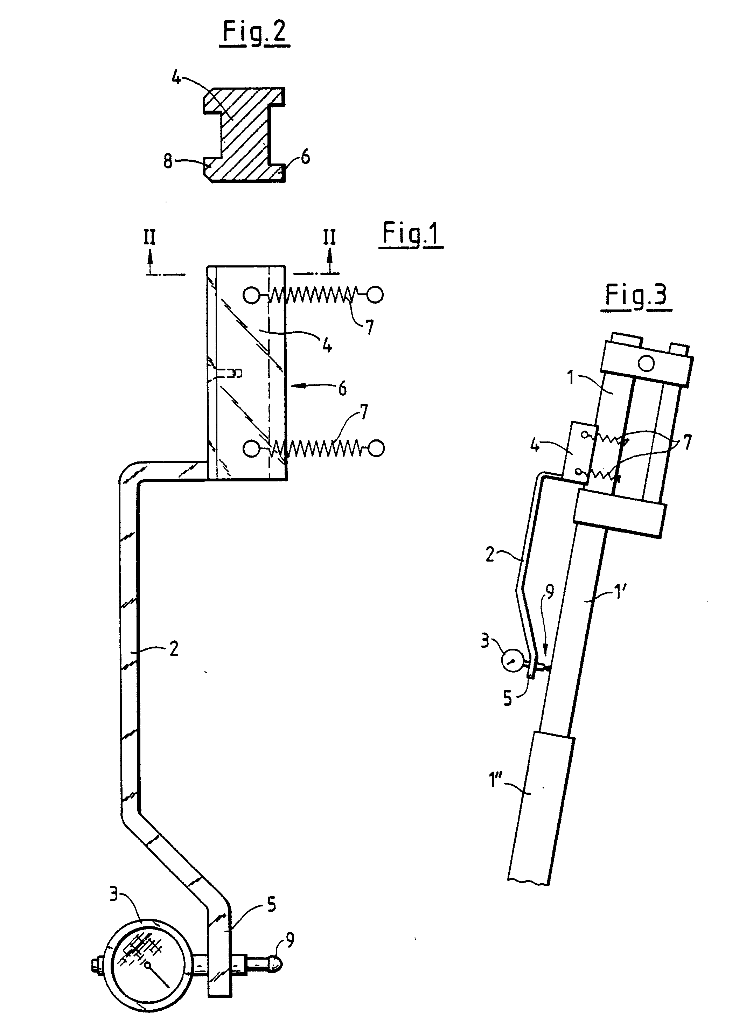

Die Vorrichtung besteht aus einem Haltekörper 4, der auf der Unterseite eine Ausnehmung 6 aufweist, mit der er beim Vermessen eines Rohres im Falle der Ausführung nach Fig. 3 auf den oberen Holm einer Motorradgabe aufgesetzt werden kann und zwar derart, daß er bei sattem Aufliegen um den Holm herum geschwenkt werden kann. Der Haltekörper selbst besteht aus einem Stahlprofil oder einem ähnlichen, in sich starren Körper und wird mit Hilfe von Schraubenfedern 7 auf den Holm aufgespannt, in dem die Federn 7 um den Holm geschlungen werden und auf der Rückseite (Fig. 1) entsprechend eingehängt werden.

Dabei ist es, wie dargestellt, besonders vorteilhaft, zwei Federn, nämlich an je einem Ende des Haltekörpers 4 vorzusehen.

Um ein Kratzen der Federn auf der Oberfläche des Holmes sicher zu vermeiden, empfiehlt es sich einen Kunststoffschlauch oder dergleichen über die Federn zu ziehen - nicht dargestellt -.

Aus den selben Überlegungen wird vorzugsweise die Anlagefläche in der Ausnehmung 6 entweder hochglanzpoliert oder aber mit einer kornfreien in sich nicht nachgiebigen Beschichtung versehen.

Die Länge der Federn 7 ist so bemessen, daß ein satter fester Sitz des Haltekörpers 4 auf dem oberen Gabelrohr garantiert ist.

An dem Haltekörper ist ein Ausleger 2 starr befestigt, der sich nach einer Seite vom Haltekörper weg - im dargestellten Ausführungsbeispiel nach unten - erstreckt. Dieser Ausleger 2 besteht vorzugsweise aus einem Vierkanteisen, dessen Abmessung so gewählt sind, daß einmal ein einwandfreier Sitz in der oberen Ausnehmung 8 des Haltekörpers 4 garantiert ist und auch das wegstehende Teil in sich unverdrehbar ist.

Der Ausleger ist im oberen Bereich von dem zu vermessenden Rundkörper mit einem ausreichenden Abstand geführt, um ihn auch über evtl. Überhöhungen am Rundrohr wie Schraubenköpfe, Muffen, Lagerkörper usw. hinwegdrehen zu können.

Im vorderen Bereich zum freien Ende hin ist er zweimal abgekröpft, wobei das vorderste Ende 5 dann wiederum parallel zu dem zu vermessenden Rundkörper verläuft. Dieses vordere Ende trägt einen Meßfühler 3, im dargestellten Ausführungsbeispiel in Form einer mechanischen Meßuhr, dessen Tastspitze 9 auf der Oberfläche des Standrohres 1' aufliegt. Dieses Standrohr 1' muß bei einer intakten Motorradgabel achsfluchtend zum oberen Holm 1 verlaufen und bildet das Standrohr eines Teleskopes 1''.

Wenn nun im praktischen Betrieb der Haltekörper 4 um das obere Gabelrohr gedreht wird, mißt das Meßgerät 3 jeweils den Abstand zwischen der Oberfläche des Standrohres 1' und dem Ende des Auslegers 2, wobei, wenn das Standrohr auch nur geringfügig verbogen oder verdreht ist an gegenüberliegenden Punkten sich deutlich unterschiedliche Meßwerte ergeben, die die fehlende Achslinearität anzeigen. In diesem Fall, und nur in diesem Fall muß dann zur Reperatur die Gabel ausgebaut werden und nicht schon für jede Vermessung.

Die vorliegende Erfindung wurde pauschal an einem ganz konkreten Ausführungsbeispiel, das sich allerdings in der Praxis sehr bewährt, erläutert. Für den Fachmann ergeben sich selbstverständlich eine Reihe von Abwandlungen, die alle im Rahmen der vorliegenden Erfindung liegen. So können insbesondere die verschiedensten Meßfühler, also auch optische, barometrisch, hydraulische, o.dgl. zur Abstandsmessung zwischen Ende des Auslegers 2 und Oberfläche des zu vermessenden Rundköpers 1' eingesetzt werden.

Auch der Ausleger 2 selbst kann in verschiedenster Weise realisiert werden, wobei nur darauf zu achten ist, daß dieser in sich formsteif ist, damit die Meßfühler-Meßwerte nicht verfälscht werden. Hierzu ist es beispielsweise auch denkbar, den Ausleger aus einem metallischen Formkörper mit einem T-förmigen Querschnitt zu realisieren.

Auch die Befestigung des Haltekörpers kann auch auf andere Weise als mit Spiralfedern, beispielsweise auch mit vorgespannten, den Rundkörper umgreifenden Blattfedern usw. realisiert werden. Voraussetzung ist allein, daß ein satter Sitz auf dem Rundkörper (oberes Gabelrohr) garantiert ist, und zwar über die ganze Länge des Haltekörpers.

Auch die Ausnehmung, mit der der Haltekörper auf das runde Rohr aufgesetzt wird, kann anders als dargestellt, beispielsweise auch in Rundform realisiert werden.

Für den Fachmann ist aus vorstehenden Ausführungen auch ersichtlich, daß auf die gleiche Weise jede Art von langgestreckten Rundkörpern, wie beispielsweise Tragstangen für lineare Auflager, Stützrohre oder dergleichen verwendet werden kann. Sofern es sich um ganz glatte Stangen oder Rohre handelt, kann dabei dann auch der Ausleger sehr viel näher an der Oberfläche geführt werden, da ja auf Überhöhungen in Form von Schraubenköpfen, Manschetten, Führungen usw. nicht Rücksicht genommen werden muß.

## Patentansprüche

1. Vorrichtung zum Überprüfen der Achslinearität von langgestreckten Rundkörpern (Stangen oder Rohren), insbesondere zum Überprüfen der Ausgerichtetheit von Radgabeln an Krafträdern, gekennzeichnet durch einen verschwenkbar auf einem Abschnitt des Rundkörpers (1) z.B. oben oberen Gabelrohr 1, befestigbaren Haltekörper (4) mit einem sich in Richtung des zu überprüfenden Rundkörpers erstreckenden, in sich starren Auslegers (2), an dessen freien Ende ein den Abstand zwischen Auslegerende (5) und Rundkörperoberfläche erfassender Meßfühler (3) vorgesehen ist.

2. Vorrichtung nach Anspruch 1, dadurch gekennzeichnet, daß als Haltekörper (4) ein quaderförmiger, dem Durchmesser des zu überprüfenden Rundkörpers in seiner Breitenerstreckung entsprechender Metallkörper vorgesehen ist, der einseitig eine satt auf dem Rundkörper aufsetzbare Ausnehmung (6) aufweist.

3. Vorrichtung nach Anspruch 2, dadurch gekennzeichnet, daß der Haltekörper über mindestens eine vorgespannte, am Haltekörper einhängbare Schraubenfeder (7) gehalten ist.

4. Vorrichtung nach Anspruch 3, dadurch gekennzeichnet, daß am vorderen und hinteren Ende des Haltekörpers (4) je eine Haltefeder (7) vorgesehen ist.

5. Vorrichtung nach einem der Ansprüche 2 bis 4, dadurch gekennzeichnet, daß die Schraubenfeder(n) (7) im Berührungsbereich mit dem Rundkörper mit einem Schlauch aus Gummi, Kunststoff oder dergleichen überzogen ist (sind).

6. Vorrichtung nach Anspruch 1, dadurch gekennzeichnet, daß als Ausleger (2) ein Vierkanteisen vorgesehen ist, das an einem Ende starr mit dem Haltekörper verbunden ist und am anderen Ende den Meßfühler trägt.

7. Vorrichtung nach Anspruch 6, dadurch gekennzeichnet, daß der Ausleger (2) vom Haltekörper (4) weg zunächst parallel zur Achse des zu vermessenden Rundkörpers im Abstand zu dessen Oberfläche geführt und dann in Richtung zur Oberfläche des Hohlkörpers hin zweimal abgekröpft ist und an der zweiten Abkröpfung (5) den Meßfühler (3) trägt.

8. Vorrichtung nach Anspruch 1, dadurch gekennzeichnet, daß als Meßfühler (3) eine mechanisch wirkende Meßuhr vorgesehen ist.

9. Vorrichtung nach Anspruch 1, dadurch gekennzeichnet, daß als Meßfühler (3) eine Druckmeßdose vorgesehen ist.

10. Vorrichtung nach einem der Ansprüche 1 bis 9, dadurch gekennzeichnet, daß die Innenseite der Ausnehmung (6) im Haltekörper (4) hochglanzpoliert und/oder mit einem kornfreien Gleitüberzug versehen ist.

Fig.2

Fig.1

Fig.3